Europäisches Patentamt

European Patent Office

Office européen des brevets

(19)

(11) Numéro de publication: **0 378 663 B1**

(12) **FASCICULE DE BREVET EUROPEEN**

(12)

(45) Date de publication de fascicule du brevet: **23.02.94** (51) Int. Cl.⁵: **G06K 9/82**, G06F 15/80

(21) Numéro de dépôt: **89908211.9**

(22) Date de dépôt: **23.06.89**

(86) Numéro de dépôt internationale :
**PCT/FR89/00326**

(87) Numéro de publication internationale :
**WO 89/12870 (28.12.89 89/30)**

(54) **DISPOSITIF DE TRAITEMENT DE SIGNAL ADAPTATIF ET NON LINEAIRE.**

(30) Priorité: **24.06.88 FR 8808521**

(43) Date de publication de la demande:
**25.07.90 Bulletin 90/30**

(45) Mention de la délivrance du brevet:
**23.02.94 Bulletin 94/08**

(84) Etats contractants désignés:
**DE FR GB IT NL SE**

(56) Documents cités:
**FR-A- 2 604 283**
**GB-A- 1 077 380**

**PROCEEDINGS OF THE NATIONAL ELECTRO-NICS CONFERENCE, Chicago, Illinois, 25-27 octobre 1965, vol. 21, pages 517-522, The National Conference Inc., Chicago, Illinois, US; W.A.HUBER: "Learning machine techniques for pattern classification"**

(73) Titulaire: **THOMSON-CSF**
**173, Boulevard Haussmann**
**F-75008 Paris(FR)**

(72) Inventeur: **REFREGIER, Philippe**
**Résidence "Les Jardins de Courcelles"**
**Bât. D F-91190 Gif-sur-Yvette(FR)**
Inventeur: **HUIGNARD, Jean-Pierre**
**11, rue Georges-Braque**
**F-75014 Paris(FR)**

(74) Mandataire: **Chaverneff, Vladimir et al**
**THOMSON-CSF**
**SCPI**
**B.P. 329**
**50, rue Jean-Pierre Timbaud**
**F-92402 Courbevoie Cédex (FR)**

EP 0 378 663 B1

Rank Xerox (UK) Business Services
(3.10/3.09/3.3.3)

PROCEEDINGS OF THE 6TH INTERNATIONAL CONFERENCE ON PATTERN RECOGNITION, Munich, 19-22 ocotbre 1981, vol. 1, IEEE Computer Society Press; F.ZIMMERMANN et al.: "Hybrid image processing", pages 51-53

EOSD ELECTRO-OPTICAL SYSTEMS DESIGN, vol. 12, no. 11, novembre 1980, Chicago, Illinois, US; D.CASASENT: "Optical pattern recognition", pages 33-39

L'ONDE ELECTRIOUE, vol. 52, fac. 10, novembre 1972, éditions Chiron, Paris, FR; A.BRUEL et al.: "Réalisation par calculateur de plans de mémoire holographique de masse", pages 439-445

APPLIED OPTICS, vol. 21, no. 2, janvier 1982, Optical Society of America, New York, US; J.R.LEGER et al.: "Hybrid optical processor for pattern recognition and classification using a generalized set of pattern functions", pages 274-287

GEC JOURNAL OF RESEARCH, vol. 1, no. 2, 1983, Rugby, GB; L.C.LAYCOCK et al.: "Two-dimensional optical image processing for pattern recognition", pages 127-135

COMPUTER, vol. 21, no. 3, mars 1988, IEEE, New York, US; H.P.GRAF et al.: "VLSI implementation of a neural network model", pages 41-48

## Description

La présente invention se rapporte à un dispositif de traitement de signal adaptatif et non linéaire.

Pour réaliser un traitement de signal en vue, par exemple, d'une reconnaissance de formes, on peut faire appel à un processeur électronique, mais sa capacité de traitement est actuellement trop limitée, en particulier si l'on désire effectuer ce traitement en temps réel.

On connaît également des dispositifs purement optiques pour résoudre ce problème tels que celui décrit dans le document "GEC Journal of Research", Vol. 1, N° 2, 1983, Rugby (GB), à l'article de L.C. LAYCOCK et al "two-dimensional optical image processing for pattern recognition", pages 127 à 135, mais ces dispositifs deviennent très complexes si on veut leur procurer une bonne adaptabilité.

La présente invention a pour objet un dispositif de traitement de signal qui soit facilement et le plus rapidement possible adaptatif et qui puisse traiter le plus rapidement possible le plus grand nombre possible d'informations, ce dispositif étant le plus simple et le moins onéreux possible.

Le dispositif de traitement conforme à l'invention est du type comprenant une source d'images, un modulateur spatial, un dispositif d'interconnexion optique suivi d'un dispositif de traitement numérique, dans lequel le dispositif d'interconnexion optique est un filtre optique placé dans le plan de Fourier de l'image, plan obtenu optiquement, et est caractérisé en ce que le dispositif de traitement numérique est un processeur neuronal.

De préférence, le dispositif d'interconnexion optique est de type holographique.

Selon un mode de réalisation, le dispositif d'interconnexion optique est un hologramme calculé et/ou synthétisé par processeur. Il peut être multiplexé spatialement et/ou en fréquence.

Selon un mode de réalisation, le processeur neuronal est un circuit de traitement spécialisé réalisé avec des technologies classiques de l'électronique. Selon un autre mode de réalisation, le processeur neuronal est un circuit de traitement spécialisé réalisé avec un calculateur numérique (ordinateur, mini-ordinateur ou micro-ordinateur). Selon encore un autre mode de réalisation, le processeur neuronal est un circuit de traitement spécialisé comportant des matrices ferro-électriques.

De façon avantageuse, on intercale entre le dispositif d'interconnexion optique et le dispositif de traitement adaptatif non linéaire un dispositif de traitement préliminaire, de préférence un dispositif de recentrage et/ou de normalisation.

La présente invention sera mieux comprise à la lecture de la description détaillée d'un mode de réalisation, pris comme exemple non limitatif et illustré par le dessin annexé, sur lequel :

- la figure 1 est le schéma simplifié d'un corrélateur optique de type connu en soi, utilisé dans la présente invention ;
- la figure 2 est le schéma du corrélateur de la figure 1 expliquant l'opération de corrélation telle qu'elle est utilisée par la présente invention ;
- la figure 3 est le schéma simplifié d'un dispositif adaptatif non linéaire utilisé par la présente invention ;
- les figures 4 et 5 sont des diagrammes d'exemples de fonctions non linéaires assurées par des éléments du dispositif de la figure 3 ;
- la figure 6 est le schéma simplifié d'un dispositif de traitement conforme à l'invention ; et
- la figure 7 est le schéma simplifié d'une variante d'un dispositif conforme à l'invention.

L'invention est expliquée ci-dessous en référence au traitement d'images tel qu'utilisé par exemple dans des systèmes de reconnaissance de formes, mais il est bien entendu qu'elle n'est pas limitée à une telle application. La dispositif de l'invention peut traiter des signaux très divers tels que des signaux vocaux (reconnaissance de la parole, par exemple), ou des signaux fournis par des capteurs de grandeurs physiques (température, pression, vitesse, contraintes), ainsi que des signaux fournis par des processeurs électroniques sur leur bus de données. La caractère adaptatif du dispositif de l'invention permet de lui faire traiter des problèmes d'ordre euristique tels que des problèmes d'optimisation de modélisation qui ne pourraient être résolus convenablement par des dispositifs de traitement classiques.

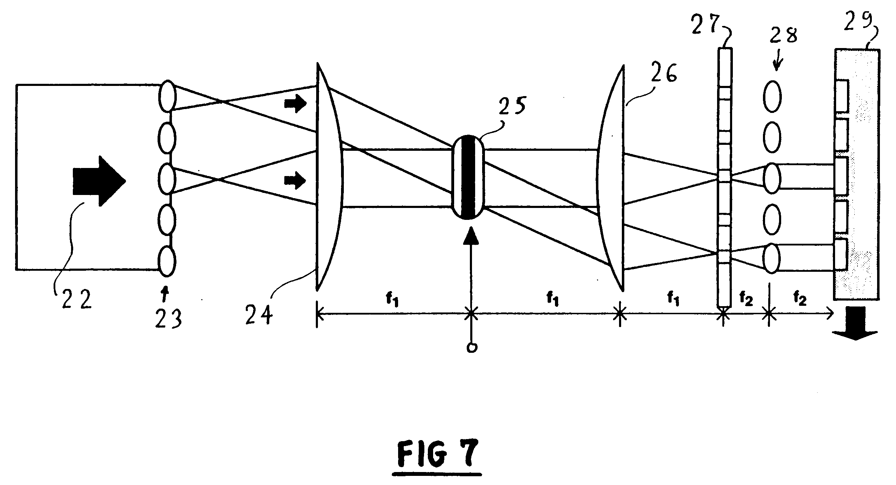

La dispositif d'interconnexion optique qui est, de par sa fonction, un filtre optique, de préférence tri-dimensionnel. utilisé dans un mode de réalisation préféré de l'invention est un corrélateur optique multiplexé spatialement, utilisant un hologramme. Cet hologramme peut être un hologramme mince et, de façon avantageuse on peut en utiliser plusieurs disposés côte-à-côte. Un tel mode de réalisation étant décrit ci-dessous en référence à la figure 7. Selon un autre mode de réalisation, on utilise un hologramme épais (également appelé hologramme de volume), réalisé par exemple à l'aide d'un cristal photoréfractif.

La corrélateur optique étant bien connu en soi, on en explique succinctement ci-dessous le fonctionnement, dans la mesure nécessaire à la compréhension de l'invention.

3

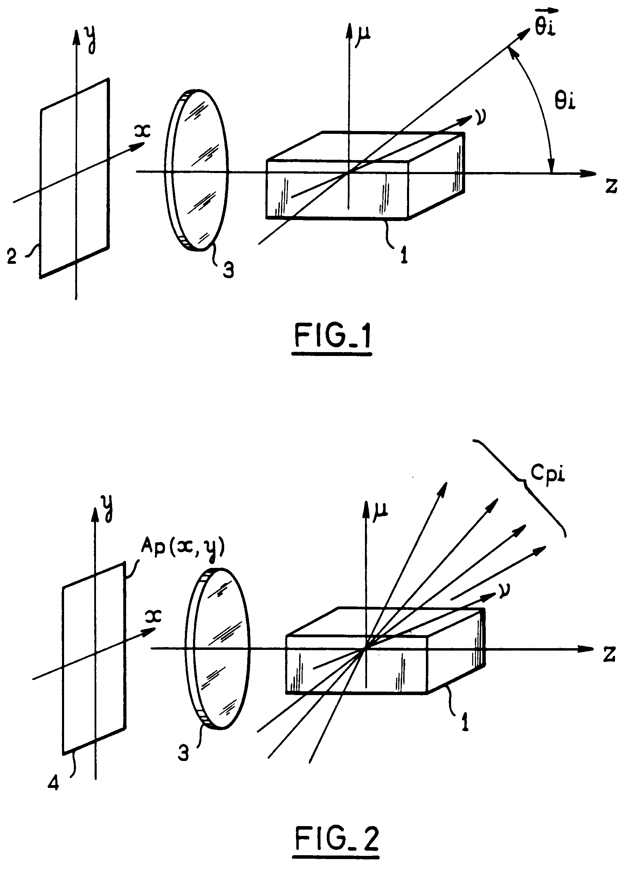

Pour le mode de réalisation à hologramme de volume, différentes images $Im_i$ (i étant le rang des images et valant de 1 à M, M étant le nombre total des images) sont enregistrées holographiquement et successivement dans un cristal photoréfractif 1. Le multiplexage spatial des images est réalisé de la façon suivante. L'information contenue dans chaque image $Im_i$ est transférée à une onde optique en modulant l'amplitude et/ou la phase de cette onde. Ainsi, à chaque image $Im_i$, symbolisée sur la figure 1 par le rectangle 2, correspond une onde optique Ai (x,y), x et y étant les axes du plan de l'image 2. Chaque image peut être enregistrée holographiquement dans le cristal 1 par interférence de deux ondes optiques. Une de ces deux ondes est la transformée de Fourier de $A_i$ (x,y), transformée que l'on notera $\tilde{A}_i$ $(\nu,\mu)$. Cette transformée de Fourier est simplement obtenue à l'aide d'une lentille 3. L'autre onde optique est une onde plane dont la direction $\theta i$ fait un angle $\theta i$ avec la direction de l'onde $\tilde{A}_i$ $(\nu,\mu)$. La résultat de l'interférence de ces deux ondes dans le cristal 1 est la création d'un réseau d'indice $\delta_{ni}$ $(\nu,\mu)$ (appelé hologramme de phase), proportionnel au réseau d'illumination $\delta I_i$ $(\nu,\mu)$ dans le cristal. On enregistre ainsi séquentiellement dans le cristal 1 l'ensemble des M images.

L'opération de corrélation est expliquée ci-dessous en référence à la figure 2. Soit une image 4 d'ordre p, $(1 \leq p \leq M)$ qui est notée $Im_p$ (x,y), dont on souhaite obtenir la corrélation avec l'ensemble des images enregistrées $I_{mi}$ (x,y). Cette image est lue optiquement et l'onde Ap (x,y) est traitée de la façon décrite ci-dessus, à l'aide de la lentille 3 et du cristal 1. La lentille 3 permet d'obtenir, dans son plan de Fourier, la transformée de Fourier $\tilde{A}_p$ $(\nu,\mu)$ de $A_p$ (x,y). L'onde transformée $\tilde{A}_p$ $(\nu,\mu)$ vient diffracter dans le cristal 1 sur l'ensemble des réseaux d'indice. Suivant chacune des directions $\theta_i$ des ondes planes de référence correspondant aux M images, on note Cpi l'amplitude de la lumière diffractée et on a :

$$Cpi = \int_{cristal} \tilde{A}_p(\nu,\mu) \cdot A_i(\nu,\mu) \, dv.d\mu.$$
$$= \int \tilde{A}_p(x,y) \, A_i(x,y) \, dx \, dy$$

(dans le plan réel). Pour plus de détails, on se reportera par exemple à la publication "Optical Holography" de Collier, Burckhardt, Lin. Academic Press 1971.

La cristal photoréfractif 1, permettant l'enregistrement holographique de volume multiplexé spatialement, peut être un cristal de Niobate de Lithium $LiNbO_3$, ou avantageusement un oxyde de bismuth silicium $Bi_{12}SiO_{20}$, ou tout autre cristal photoréfractif.

Selon une variante le multiplexage décrit ci-dessus peut être réalisé avec des hologrammes enregistrés photographiquement (par exemple avec de la gélatine bichromatée, comme décrit dans la publication "Optical Holography" précitée).

En tant que dispositif de traitement adaptatif non linéaire, le mode de réalisation préféré de l'invention utilise un réseau neuronal.

Il n'existe pas encore de définition précise des réseaux neuronaux. On va donc exposer ci-dessous ce que la présente invention entend par réseaux neuronaux, puis comment elle les met en oeuvre.

Un réseau neuronal est un dispositif qui permet de réaliser des opérations de traitement de signal, et plus précisément, qui permet d'associer différents signaux de sortie du dispositif à différents ensembles de signaux d'entrée possibles. De plus ce dispositif "apprend" cet ensemble d'associations sans programmation particulière, mais uniquement par présentation de différents couples (entrées, sorties) qu'on souhaite associer. Ce mode de fonctionnement s'appelle apprentissage supervisé. Les principales caractéristiques d'un tel dispositif du point de vue de la présente invention sont les suivantes :

- Il n'est pas nécessaire de formuler le problème, et donc de décrire ou de connaître la forme des signaux à traiter. Il suffit de les présenter à l'entrée du dispositif et, en comparant les signaux de sortie du dispositif à ceux désirés, à procéder à l'"apprentissage" décrit ci-dessous.
- Un tel dispositif peut fonctionner avec une bonne résistance au bruit affectant le signal d'entrée, ou bien avec un signal d'entrée à faible résolution.

On décrit ci-dessous des réseaux neuronaux en couches, mais il est bien entendu que l'on peut utiliser d'autres structures présentant la même fonction, par exemple des structures bouclées telles que décrites dans les publications "Self Organisation and Associative Memory" de T. Kohonen aux éditions Springer Verlag, 1984 et "Parallel Distributed Processing" de D.E. Rumelhart et J.L. Mc Clelland, MIT Press, 1986.

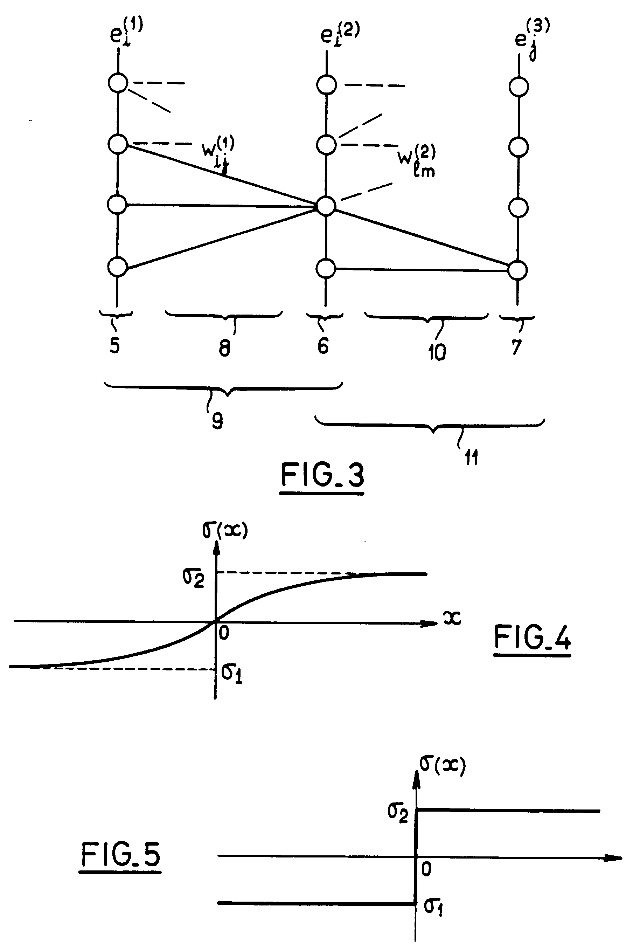

On a schématiquement représenté sur la figure 3, les principaux éléments d'un réseau neuronal à plusieurs couches.

La couche d'entrée 5 est constituée de $N_1$ éléments d'entrée de signal, qui peuvent aussi bien être non-linéaires que linéaires, notés $e^{(1)}_i$ $(i = 1...N_1)$. En reprenant la notation de la figure 2, le signal d'entrée est $|C_{pi}|^2$, et $N_1$ est égal ou supérieur à M. Si on fait interférer l'onde diffractée par l'hologramme de volume avec une onde plane, le signal d'entrée du réseau neuronal pourra comporter une information plus riche que le simple $|C_{pi}|^2$.

La deuxième couche 6 est constituée de $N_2$ éléments non linéaires $e^{(2)}_i$, (avec i' = 1....$N_2$) appelés neurones. On a représenté sur les figures 4 et 5 deux exemples de la fonction que peut réaliser chaque neurone. La fonction $\sigma(x)$ de la figure 4 est appelée sigmoïde : la sortie (ordonnée) est une fonction monotone de l'entrée (abscisse), définie de moins l'infini à plus l'infini, qui présente un palier de saturation à $\sigma 1$ et un autre à $\sigma 2$. La fonction de la figure 5 a pour valeur $\sigma 1$ de - ∞ à zéro et $\sigma 2$ de 0 à + ∞.

La troisième couche 7 est constituée d'éléments linéaires ou non $e^{(3)}_j$ (avec J = 1...$N_3$).

Les éléments des couches 5 et 6 sont reliés par une couche d'interconnexion linéaire 8 ou matrice, notée $W^{(1)}_{ij}$ qui réalise un produit matriciel de ses entrées. Ainsi, l'ensemble 9, comportant les couches 5,8,6 effectue l'opération :

$$e^{(2)}_i = \sigma\left[\sum_{j}^{N1} W^{(1)}_{ij} e^{(1)}_j\right]$$

Les éléments des couches 6 et 7 sont reliés par une couche d'interconnexion linéaire 10 ou matrice, notée $W^{(2)}_{lm}$, qui réalise également un produit matriciel de ses entrées. Ainsi, l'ensemble 11, comportant les couches 6,10,7 effectue l'opération :

$$e^{(3)}_l = \sigma\left[\sum_{m=1}^{N1} W^{(2)}_{lm} e^{(2)}_m\right]$$

Bien entendu, l'invention n'est pas limitée à trois couches mais peut en comporter davantage. Il faut et il suffit que l'une d'entre elle comporte des éléments non-linéaires.

En pratique, on introduit sur chacune des couches de neurones (lorsqu'il y a plusieurs couches de neurones ou éléments non-linéaires) un neurone dont la valeur reste fixée à 1. Cela permet de réaliser pour chaque neurone de la couche suivante la fonction $\sigma(x-a)$, dans laquelle a est la valeur de la connexion entre ce dernier neurone fixe de la couche précédente, et x le signal d'entrée de cette couche précédente.

Pour pouvoir utiliser un dispositif à réseau neuronal tel que défini ci-dessus, il est nécessaire de procéder préalablement à un "apprentissage" supervisé. L'apprentissage est le calcul des valeurs des connexions $W^n_{ij}$ (avec n = 1..L-1 s'il a L couches de neurones, ou couches non-linéaires) dans le cadre du problème à résoudre. Pour les détails des différentes méthodes qui permettent ce calcul, on peut se reporter par exemple aux publications de Springer Verlag et MIT Press citées ci-dessus. On va seulement exposer ci-dessous le principe général de l'apprentissage supervisé qui force le dispositif à s'adapter pour pouvoir effectuer les différentes tâches d'association qu'on lui impose.

On choisit des valeurs de connexions aléatoires. On présente successivement différentes entrées parmi les couples (entrées, sortie) que l'on souhaite que le dispositif associe. Pour chacune des entrées présentées, on compare la sortie obtenue par le dispositif à la sortie désirée, et à partir de l'erreur entre ces deux sorties, on déduit les corrections à effectuer sur les matrices d'interconnexion pour diminuer cette erreur. On arrête l'apprentissage quand le dispositif ne fait plus d'erreur sur les exemples qu'on lui présente.

Une des caractéristiques essentielles d'un tel dispositif est son immunité au bruit. En effet, quand l'apprentissage a été correctement réalisé, lorsque l'on présente au dispositif un signal d'entrée bruité qui n'a pas été présenté auparavant, le signal de sortie est celui correspondant à un signal d'entrée non bruité.

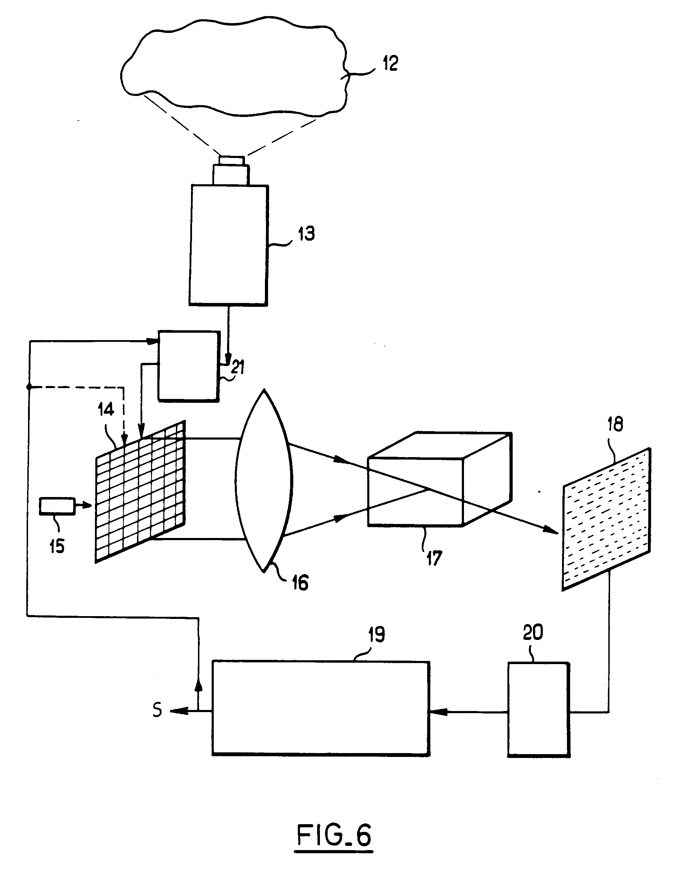

On va maintenant décrire en référence à la figure 6 un exemple de réalisation du dispositif de traitement de l'invention.

Dans cet exemple, les sources de signaux d'entrée sont des images 12, par exemple des diapositives, des photographies sur papier... Ces images sont analysées par une caméra 13 et les signaux résultants sont envoyés à un modulateur spatial 14, par exemple du type à cristaux liquides, coopérant avec un émetteur laser 15. Le modulateur spatial pourra fonctionner par codage en amplitude ou en phase de l'onde optique. En effet, pour réaliser l'enregistrement optique de ces images, il faut produire des ondes optiques monochromatiques (pour une même opération d'enregistrement) et cohérentes, pour pouvoir faire interférer ces ondes. Toutefois, pour des opérations d'enregistrement distinctes on peut, le cas échéant, changer la longueur d'onde de ces ondes optiques. On associe ainsi un multiplexage fréquentiel au multiplexage spatial du corrélateur optique. Les images 12 sont enregistrées optiquement sous forme d'hologrammes de volume multiplexés spatialement, comme expliqué ci-dessus en référence à la figure 1, à l'aide d'une lentille 16 et d'un cristal photoréfractif 17.

L'acquisition des intensités lumineuses diffractées issues du cristal 17 est réalisée par un détecteur 18. Ce détecteur est par exemple une caméra CCD ou une barette de photodiodes.

Las signaux de sortie du détecteur 18 sont envoyés à un processeur neuronal 19. Ce processeur peut être réalisé de différentes façons : par exemple soit un ordinateur ou un micro-ordinateur (les fonctions neuronales et les interconnexions y sont simulées numériquement), soit un processeur spécialisé permettant de réaliser les fonctions neuronales (non linéaires) et les interconnexions. On trouvera des exemples de réalisation dans l'article "Parallel Architectures for Neurocomputers" de Philips Treleaven paru dans Proceedings of European Seminar on Neural Computing, de Février 1988. De façon avantageuse, on intercale entre le détecteur 18 et le processeur 20, un dispositif 20 de traitement préliminaire par exemple de recentrage autour du zéro ou de normalisation, par exemple pour placer tous les pics de corrélation entre -1 et +1 (ou $\sigma 1$ $^{et}$ $\sigma 2$).

Selon un mode de réalisation avantageux de l'invention, on intercale entre la caméra 13 et le modulateur 14 un dispositif 21 de pré-traitement électronique (traitement de contour, de contraste, et....), la sortie du processeur 19 étant reliée en rétro-action à ce dispositif 21. Selon une variante, si le modulateur 14 comporte des moyens électroniques permettant d'assurer un traitement d'image, on peut relier la sortie du processeur 19 à ces moyens (liaisons en trait interrompu sur la figure 6).

L'apprentissage du processeur neuronal du dispositif de la figure 6 se fait de la façon exposée ci-dessus en référence à la figure 3, en lui présentant les signaux du détecteur 18 correspondant à l'ensemble des images enregistrées par holographie de volume, et en modifiant les valeurs des interconnexions du processeur neuronal en fonction de l'écart entre la sortie réellement obtenue et la sortie désirée, et ce, autant de fois que nécessaire pour que le processeur ne fasse plus d'erreur.

Le traitement proprement dit assuré par le dispositif de la figure 6 consiste en la présentation d'images à la caméra 13 et en la lecture des signaux de sortie du processeur 19. Ces images présentées à la caméra 13 comportent, bien entendu, certaines analogies ou points communs avec les images ayant servi à l'apprentissage. Pour simplifier les explications, on se réfère ci-dessous aux lettres de l'alphabet mais il est bien entendu que le dispositif de l'invention peut traiter, et est surtout destiné à traiter, des images beaucoup plus complexes. Pour l'apprentissage, on enregistre ces lettres manuscrites par différentes personnes, et pour le traitement proprement dit, on fait reconnaître au dispositif ces mêmes lettres manuscrites par d'autres personnes. Dans le cas de reconnaissance de formes d'objets on procède à l'apprentissage sur des photographies de diverses qualités de ces objets, ce qui permet de reconnaître ensuite ces mêmes objets même flous (en mouvement, ou filmés dans de mauvaises conditions).

On peut également traiter des images enregistrées différentes des images à reconnaître (le nombre d'images à reconnaître pouvant être supérieur ou égal au nombre d'images enregistrées). Les images enregistrées peuvent être des filtres déterminés a priori, permettant de projeter les images à reconnaître sur une base fixée. Par exemple, ces filtres peuvent être déterminés a priori pour le type de problème que l'on désire résoudre, mais indépendamment des images précises que l'on désire reconnaître.

Les images enregistrées (ou les filtres) peuvent également être construites à partir des images à reconnaître (comme par exemple dans le cas de filtres non redondants). (voir par exemple l'article de D. CASASENT paru dans Applied Optics, vol 23 n° 10, 15 mai 1984, pages 1620 et suivantes. Ceci peut, par exemple, permettre de reconnaître un nombre d'images supérieur au nombre d'images enregistrées. Toutefois, une telle possibilité est offerte par le premier dispositif de reconnaissance évoqué ci-dessus si on considère que des images bruitées ou affectées de petites transformations telles que distorsion, rotation, sont différentes des images enregistrées.

Le dispositif décrit ci-dessus présente par rapport aux dispositifs connus plusieurs avantages importants.

Il est bien connu que le nombre de pixels permettant une représentation correcte (en termes de résolution notamment) d'une image est très grand. Par exemple, le nombre minimal de pixels pour reconnaître un visage d'après une photographie codée numériquement est de l'ordre de $10^5$. De plus, le nombre de niveaux de gris doit être d'au moins 8 pour que l'information portée par l'image ne soit pas trop tronquée dès le début du traitement. Donc, si on désire réaliser numériquement les corrélations d'une image avec par exemple 1000 images, il faut procéder A $10^8$ multiplications de mots de 3 bits. Actuellement, il n'est pas réaliste de considérer qu'avec les microprocesseurs existants ce temps de calcul puisse être inférieur à quelques centaines de secondes. De plus les images enregistrées nécessiteraient une mémoire de 37,5 méga-octets, ce qui impliquerait des temps de traitement beaucoup trop longs pour un traitement en temps réel.

Par contre, le corrélateur optique du dispositif de l'invention permet d'enregistrer ces images très facilement, par holographie, par exemple par hologramme de volume, et d'effectuer les opérations de corrélation en temps réel. Selon un exemple de réalisation, on peut enregistrer environ 1000 images comportant chacune environ $10^6$ pixels et, ensuite, le temps de calcul est en réalité limité par le temps d'acquisition des intensités diffractées, donc inférieure à la cadence des images vidéo (1:25 de seconde) dans le cas d'un système d'acquisition à caméra vidéo.

Un autre avantage, très important, est que la combinaison du corrélateur optique et du processeur neuronal permet un traitement de l'information prenant en compte l'ensemble des pics de corrélation. Un mode de fonctionnement du corrélateur optique particulièrement simple est de considérer que l'image $A_{io}$ - (x,y) reconnue lorsque l'on présente une image $A_p$ (x,y) est celle dont la corrélation $C_{Pi}$ est maximale. Pour optimiser le fonctionnement du dispositif, on peut procéder à plusieurs traitements sur les pics de corrélation, par exemple un pré-traitement tel que réalisé par le dispositif 20, ou d'autres traitements connus en soi.

De par son mode d'apprentissage, le processeur neuronal s'adapte aux imperfections du corrélateur optique. Cet aspect adaptatif du processeur neuronal est très important car il permet d'utiliser pleinement les capacités du corrélateur optique sans se soucier de ses imperfections puisqu'elles sont automatiquement prises en compte dans le dispositif de traitement neuronal des pics de corrélation.

D'un point de vue théorique, l'opération effectuée par la corrélation optique peut être formellement identifiée à celle effectuée par une matrice d'interconnexions. Il suffit de nommer (e $^{(o)}_i$ (i = 1 ... $M_p$) les $M_p$ pixels fournis par le dispositif capteur d'images et $W^{(o)}_{li}$ le $i^{ème}$ pixel de la $l^{ième}$ image enregistrée par holographie de volume dans le cristal photoréfractif pour mieux se rendre compte de cet aspect. La sommation continue apparaissant dans l'opération de corrélation est équivalente à une sommation discrète, au moins du point de vue formel. La couche e $^{(1)}_i$ de neurones mentionnée ci-dessus réalise alors une fonction non linéaire qui peut être différente de celle réalisée par les autres éventuelles couches intermédiaires de neurones.

Ainsi, le dispositif de l'invention peut être considéré comme un processeur neuronal pouvant réaliser des fonctions arbitraires et ayant un grand nombre de neurones d'entrée. Le première couche (corrélateur optique) réalise la fonction de "contraction de l'information" (pour l'exemple cité, passage de $10^6$ pixels à $10^3$ pics de corrélation) permettant d'atteindre pour la matrice d'interconnexions des ordres de grandeur pouvant être aisément traités par des circuits électroniques classiques.

On a représenté en figure 7 le bloc-diagramme d'un dispositif multicanaux à filtres multiplexés spatialement. Ce dispositif comporte une source lumineuse 22 éclairant un réseau 23 de lentilles. Le réseau 23 est suivi d'une lentille de Fourier 24, d'un modulateur spatial 25 (tel que le modulateur 14 de la figure 6, et relié comme ce dernier à une source d'image telle que la caméra 13, éventuellement suivie d'un dispositif électronique de pré-traitement tel que le le dispositif 21), d'une lentille de Fourier 26, d'une matrice 27 de filtres holographiques disposés côte à côte dans un plan et différents les uns des autres, d'un ensemble 28 de micro-lentilles fournissant la transformée de Fourier inverse de l'onde modulée spatialement, et un détecteur 29, par exemple une caméra à CCD. Le signal du détecteur 29 est traité de la même façon que celui du détecteur 18 de la figure 6 par des dispositifs semblables aux dispositifs 20 et 19 (et, le cas échéant 21) de cette figure 6.

Dans ce dispositif de la figure 7, chaque filtre de l'ensemble 27 correspond à une image $Im_i$ (x,y), et on enregistre sa transformée de Fourier optique $\tilde{A}_i$ ($v,\mu$).

Si $Im_p$ (x,y) est l'image à reconnaître au niveau de chaque filtre $\tilde{A}_i$ ($v,\mu$), le dispositif de la figure 7 réalise l'opération :

$$\tilde{A}_i \; (v,\mu). \; \tilde{A}_p \; (v,\mu)$$

ce qui permet, à l'aide d'une seconde lentille (de l'ensemble 28), d'obtenir les fonctions de corrélation $Ci_p$ - (x,y) :

$$C_{ip} (x,y) = \left[ \int_{\beta} \int_{\alpha} \widetilde{A}_p \ (x-\alpha, \ y-\beta) . \ \widetilde{A}_c \ (\alpha, \beta) \ d\alpha \ d\beta \right]^2,$$

chacune des fonctions de corrélation étant adressée à une sous-fenêtre du plan de détection 29, chacun des pics n'adressant qu'une seule de ces sous-fenêtres et pouvant bien sûr se déplacer à l'intérieur de celle-ci. Cette méthode permet d'obtenir une invariance par rapport à la translation.

**Revendications**

**1.** Dispositif de traitement de signal adaptatif et non linéaire du type comportant une source d'images, un modulateur spatial, un dispositif d'interconnexion optique suivi d'un dispositif de traitement numérique, dans lequel le dispositif d'interconnexion optique (14 à 17) est un filtre optique placé dans le plan de Fourier de l'image, plan obtenu optiquement, caractérisé en ce que le dispositif de traitement numérique est un processeur neuronal (19).

**2.** Dispositif de traitement de signal selon la revendication 1, caractérisé par le fait que le filtre optique est du type holographique.

**3.** Dispositif de traitement de signal selon la revendication 1, caractérisé par le fait que le filtre optique est un filtre de phase.

**4.** Dispositif de traitement de signal selon la revendication 1 ou 3, caractérisé par le fait que le filtre optique est un filtre d'amplitude.

**5.** Dispositif de traitement de signal selon la revendication 1, caractérisé en ce que le filtre optique est calculé et/ou synthétisé par processeur.

**6.** Dispositif de traitement de signal selon l'une des revendications 1 à 4, caractérisé par le fait que le filtre optique est un corrélateur optique multiplexé spatialement (16, 17).

**7.** Dispositif de traitement de signal selon la revendication 6, caractérisé par le fait que le corrélateur optique comporte un cristal photoréfractif de volume (17) associé à une lentille optique (16).

**8.** Dispositif de traitement de signal selon l'une des revendications 1 à 7, caractérisé par le fait que le filtre optique est multiplexé en fréquence.

**9.** Dispositif de traitement de signal selon l'une quelconque des revendications 6 ou 7, caractérisé par le fait que le corrélateur optique est constitué de plusieurs hologrammes minces disposés côte à côte (27).

**10.** Dispositif de traitement de signal selon l'une des revendications 1 à 9, caractérisé par le fait que le dispositif de traitement adaptatif non linéaire est relié en rétroaction en amont du filtre optique.

**11.** Dispositif de traitement de signal selon la revendication 10, caractérisé par le fait que la liaison de rétroaction est reliée à un processeur (21) spécialisé de traitement d'image placé en amont de la valve optique.

**12.** Dispositif de traitement de signal selon la revendication 10 ou 11, caractérisé par le fait que la valve optique comporte des moyens électroniques assurant un traitement d'image.

**13.** Dispositif de traitement de signal selon l'une des revendications 10 à 12, caractérisé par le fait que la boucle de rétroaction est reliée à la valve optique.

**14.** Dispositif de traitement de signal selon l'une des revendications précédentes, caractérisé par le fait que le processeur neuronal est un circuit de traitement spécialisé réalisé avec des technologies classiques de l'électronique.

15. Dispositif de traitement de signal selon l'une des revendications précédentes, caractérisé par le fait que le processeur neuronal est un circuit de traitement spécialisé réalisé avec un calculateur numérique.

16. Dispositif de traitement de signal selon l'une des revendications précédentes, caractérisé par le fait que le processeur neuronal est un circuit de traitement spécialisé comportant des matrices ferro-électriques.

17. Dispositif de traitement de signal selon l'une des revendications précédentes, caractérisé par le fait que l'on intercale entre le dispositif d'interconnexion optique et le processeur neuronal un dispositif de traitement préliminaire (20).

18. Dispositif de traitement de signal selon la revendication 17, caractérisé par le fait que le dispositif de traitement préliminaire comporte un dispositif de recentrage.

19. Dispositif de traitement de signal selon la revendication 17 ou 18, caractérisé par le fait que le dispositif de traitement préliminaire comporte un dispositif de normalisation.

## Claims

1. Nonlinear adaptive signal-processing device of the type comprising an image source, a spatial modulator, an optical interconnection device followed by a digital processing device, in which the optical interconnection device (14 to 17) is an optical filter placed in the Fourier plane of the image, which plane is obtained optically, characterized in that the digital processing device is a neural processor (19).

2. Signal-processing device according to Claim 1, characterized in that the optical filter is of the holographic type.

3. Signal-processing device according to Claim 1, characterized in that the optical filter is a phase filter.

4. Signal-processing device according to Claim 1 or 3, characterized in that the optical filter is an amplitude filter.

5. Signal-processing device according to Claim 1, characterized in that the optical filter is computed and/or synthesized by a processor.

6. Signal-processing device according to one of Claims 1 to 4, characterized in that the optical filter is a spatially multiplexed optical correlator (16, 17).

7. Signal-processing device according to Claim 6, characterized in that the optical correlator comprises a volume photorefractive crystal (17) combined with an optical lens (16).

8. Signal-processing device according to one of Claims 1 to 7, characterized in that the optical filter is frequency multiplexed.

9. Signal-processing device according to either one of Claims 6 and 7, characterized in that the optical correlator consists of a plurality of thin holograms (27) arranged side by side.

10. Signal-processing device according to one of Claims 1 to 9, characterized in that the nonlinear adaptive processing device is connected in feedback upstream of the optical filter.

11. Signal-processing device according to Claim 10, characterized in that the feedback connection is connected to a specialized image-processing processor (21) placed upstream of the optical valve.

12. Signal-processing device according to Claim 10 or 11, characterized in that the optical valve comprises electronic means ensuring image processing.

**13.** Signal processing device according to one of Claims 10 to 12, characterized in that the feedback loop is connected to the optical valve.

**14.** Signal-processing device according to one of the preceding claims, characterized in that the neural processor is a specialized processing circuit produced with conventional technologies used in electronics.

**15.** Signal-processing device according to one of the preceding claims, characterized in that the neural processor is a specialized processing circuit produced with a digital computer.

**16.** Signal-processing device according to one of the preceding claims, characterized in that the neural processor is a specialized processing circuit comprising ferroelectric matrices.

**17.** Signal-processing device according to one of the preceding claims, characterized in that a preliminary processing device (20) is inserted between the optical interconnection device and the neural processor.

**18.** Signal-processing device according to Claim 17, characterized in that the preliminary processing device comprises a recentring device.

**19.** Signal-processing device according to Claim 17 or 18, characterized in that the preliminary processing device comprises a normalization device.

**Patentansprüche**

**1.** Anpassungsfähige und nichtlineare Signalverarbeitungseinrichtung des Typs mit einer Bildquelle, einem räumlichen Modulator und einer optischen Verbindungseinrichtung, gefolgt von einer digitalen Verabeitungseinrichtung, wobei die optische Verbindungseinrichtung (14 bis 17) ein optisches Filter ist, das in der Fourier-Ebene des Bildes angeordnet ist, die optisch erzeugt wird, dadurch gekennzeichnet, daß die digitale Verarbeitungseinrichtung ein neuronaler Prozessor (19) ist.

**2.** Signalverarbeitungseinrichtung gemäß Anspruch 1, dadurch gekennzeichnet, daß das optische Filter vom holographischen Typ ist.

**3.** Signalverarbeitungseinrichtung gemäß Anspruch 1, dadurch gekennzeichnet, daß das optische Filter ein Phasenfilter ist.

**4.** Signalverarbeitungseinrichtung gemäß Anspruch 1 oder 3, dadurch gekennzeichnet, daß das optische Filter ein Amplitudenfilter ist.

**5.** Signalverarbeitungseinrichtung gemäß Anspruch 1, dadurch gekennzeichnet, daß das optische Filter durch einen Prozessor berechnet und/oder sythetisiert wird.

**6.** Signalverarbeitungseinrichtung gemäß einem der Ansprüche 1 bis 4, dadurch gekennzeichnet, daß das optische Filter ein räumlich multiplexierter optischer Korrelator (16, 17) ist.

**7.** Signalverarbeitungseinrichtung gemäß Anspruch 6, dadurch gekennezeichnet, daß der optische Korrelator einen lichtbrechenden Volumenkristall (17) enthält, der einer optischen Linse (16) zugeordnet ist.

**8.** Signalverarbeitungseinrichtung gemäß einem der Ansprüche 1 bis 7, dadurch gekennzeichnet, daß das optische Filter frequenzmultiplexiert ist.

**9.** Signalverarbeitungseinrichtung gemäß einem der Ansprüche 6 oder 7, dadurch gekennzeichnet, daß der optische Korrelator von mehreren nebeneinander angeordneten, dünnen Hologrammen (27) gebildet ist.

**10.** Signalverarbeitungseinrichtung gemäß einem der Ansprüche 1 bis 9, dadurch gekennzeichnet, daß die nichtlineare, anpassungsfähige Verarbeitungseinrichtung vor dem optischen Filter in Rückkopplung angeschlossen ist.

11. Signalverarbeitungseinrichtung gemäß Anspruch 10, dadurch gekennzeichnet, daß die Rückkopplungsverbindung mit einem Prozessor (21) verbunden ist, der auf die Bildverarbeitung spezialisiert und vor dem optischen Ventil angeordnet ist.

12. Signalverarbeitungseinrichtung gemäß Anspruch 10 oder 11, dadurch gekennzeichnet, daß das optische Ventil elektronische Mittel aufweist, die eine Bildverarbeitung gewährleisten.

13. Signalverarbeitungseinrichtung gemäß einem der Ansprüche 10 bis 12, dadurch gekennzeichnet, daß die Rückkopplungsschleife mit dem optischen Ventil verbunden ist.

14. Signalverarbeitungseinrichtung gemäß einem der vorangehenden Ansprüche, dadurch gekennzeichnet, daß der neuronale Prozessor eine spezialisierte Verbeitungsschaltung ist, die mit herkömmlichen elektronischen Technologien verwirklicht ist.

15. Signalverarbeitungseinrichtung gemäß einem der vorangehenden Ansprüche, dadurch gekennzeichnet, daß der neuronale Prozessor eine spezialisierte Verarbeitungsschaltung ist, die mit einem digitalen Rechner verwirklicht ist.

16. Signalverarbeitungseinrichtung gemäß einem der vorangehenden Ansprüche, dadurch gekennzeichnet, daß der neuronale Prozessor eine spezialisierte Verarbeitungsschaltung ist, die ferroelektrische Matrizen enthält.

17. Signalverarbeitungseinrichtung gemäß einem der vorangehenden Ansprüche, dadurch gekennzeichnet, daß zwischen die optische Verbindungseinrichtung und den neuronalen Prozessor eine Vorverarbeitungseinrichtung (20) geschaltet ist.

18. Signalverarbeitungseinrichtung gemäß Anspruch 17, dadurch gekennzeichnet, daß die Vorverarbeitungseinrichtung eine Rezentrierungseinrichtung enthält.

19. Signalverarbeitungseinrichtung gemäß Anspruch 17 oder 18, dadurch gekennzeichnet, daß die Vorverarbeitungseinrichtung eine Normierungseinrichtung enhält.

FIG_1

FIG_2

$e_i^{(1)}$    $e_i^{(2)}$    $e_j^{(3)}$

$w_{ij}^{(1)}$    $w_{\ell m}^{(2)}$

5    8    6    10    7

9

11

## FIG.3

$\sigma(x)$

$\sigma_2$

$x$

0

$\sigma_1$

## FIG.4

$\sigma(x)$

$\sigma_2$

0

## FIG.5

$\sigma_1$

13

FIG.6

FIG 7

EP 0 378 663 B1